Europäisches Patentamt

European Patent Office

Office européen des brevets

(11) Publication number: **0 095 252**
**A2**

# EUROPEAN PATENT APPLICATION

(21) Application number: **83302347.6**

(22) Date of filing: **26.04.83**

(51) Int. Cl.³: **F 02 D 15/04**
**F 02 B 23/04**

(30) Priority: **25.05.82 GB 8215154**

(43) Date of publication of application:
**30.11.83 Bulletin 83/48**

(84) Designated Contracting States:
**DE FR GB IT SE**

(71) Applicant: **FORD MOTOR COMPANY LIMITED**
**Eagle Way**
**Brentwood Essex CM13 3BW(GB)**

(84) Designated Contracting States:
**GB IT SE**

(71) Applicant: **FORD-WERKE AKTIENGESELLSCHAFT**
**Ottoplatz 2 Postfach 21 03 69**
**D-5000 Köln 21(DE)**

(84) Designated Contracting States:
**DE**

(71) Applicant: **FORD FRANCE SOCIETE ANONYME**
**344 Avenue Napoléon Bonaparte B.P. 307**
**F-92506 Rueil Malmaison Cedex(FR)**

(84) Designated Contracting States:
**FR**

(72) Inventor: **Ma, Thomas Tsoi-Hei**
**96 Hamberts Road South Woodham Ferrers**
**Chelmsford Essex(GB)**

(74) Representative: **Messulam, Alec Moses et al,**
**A. Messulam & Co. 24 Broadway**
**Leigh on Sea Essex SS9 1BN(GB)**

(54) Internal combustion engine.

(57) The invention relates to an internal combustion engine in which an auxilary chamber 22 is provided communicating with the combustion chamber 12. A valve 20 is arranged to open and close in such a manner as to isolate the auxiliary chamber 22 from the combustion chamber 12 during the compression period of the piston 10 and remove a variable fraction of the charge from the combustion process in order to vary the effective compression ratio and the air usage of the engine.

FIG.I.

## INTERNAL COMBUSTION ENGINE

The present invention relates to an internal combustion engine.

According to the present invention, there is provided an internal combustion engine having a combustion chamber, an auxiliary chamber communicating with the combustion chamber and valve means for isolating the auxiliary chamber from the combustion chamber during the compression period to remove a variable fraction of the charge from the combustion chamber prior to full compression, so as to vary the effective compression ratio of the engine and/or the effective air usage.

The principle underlying the present invention is the provision of an auxiliary volume separated from the main volume of the combustion chamber by an auxiliary valve which is closed at a variable angle during the compression period. The compression therefore takes place in two stages namely a low compression stage when the valve is open and a high compression stage when the valve is closed. The effective compression ratio is determined by the relative duration of the two stages that is to say by the timing of the closing of the auxiliary valve. The valve remains closed through combustion, expansion and exhaust and may re-open at any time during the next intake period or at the beginning of the next compression period.

The system therefore has a variable effective compression ratio with a fixed chamber geometry at the beginning of combustion, fixed final clearence volume and fixed high expansion ratio.

This variable compression ratio system offers several advantages some of which are now set out.

First, the expansion ratio is higher than the variable compression ratio. Consequently, the theoretical cycle efficiency is higher than that of a normal cycle in which the expansion ratio is equal to the compression ratio.

Second, the auxiliary volume is shut off from the cylinder volume during combustion. Therefore, there is no change to the basic chamber geometry at the commencement of combustion, no change in turbulence and flame propagation characteristics and no thermal or mechanical loading on the auxiliary volume during combustion.

Furthermore, the effective compression ratio is adjusted by controlling the timing of opening and closing of the auxiliary valve. This control requires low actuation power and has the advantage of being progressive, of fast response and fully programmable. If desired, the control can be made responsive to engine speed and load and can be made responsive to special constraints such as knock and cold starting.

The invention will now be described further, by way of example, with reference to the accompanying drawings, in which:

Fig.1 is a schematic representation of an internal combustion engine having an auxiliary volume to permit control of the compression ratio, and

Fig.2 shows a modification of the engine in Fig. 1 having an additional provision for a return bleed from the auxiliary chamber into the intake manifold.

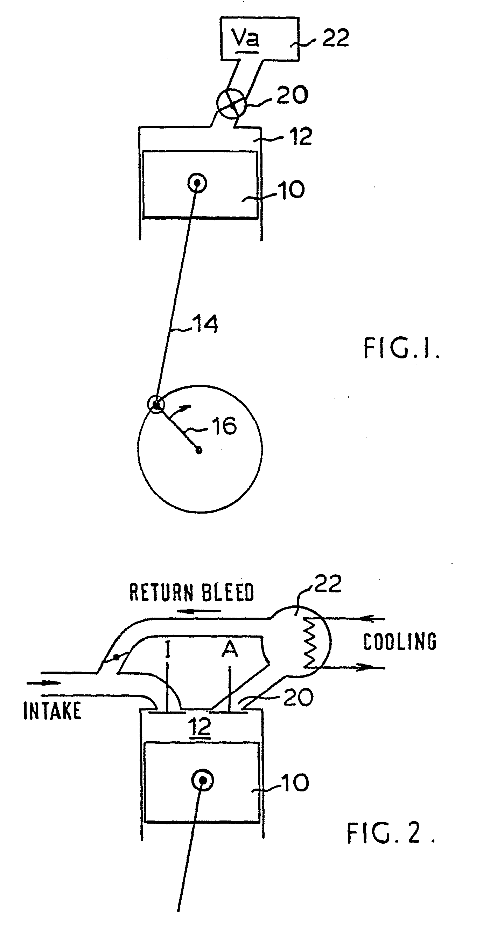

In Fig.1, there is shown an internal combustion engine having a piston 10 reciprocable within a chamber 12 and connected by a connecting rod 14 to a crank 16 of the crankshaft. The chamber 12 is connected via an auxiliary valve 20 to an auxiliary volume 22. The auxiliary valve 20 is opened and closed during each cycle in order to vary the effective compression ratio of the internal combustion engine.

Assuming that Vs is the swept volume of the cylinder, Vc is the clearance volume and Va is the auxiliary volume, then if the auxiliary valve is closed at the top dead centre position, the compression ratio CR is given by:

$$CR = (Vs + Vc + Va) / (Vc + Va).$$

If, on the other hand, the auxiliary valve is closed at the bottom dead centre position, then the compression ratio CR is given by:

$$CR = (Vs + Vc) / Vc.$$

These two values represent the lowest and highest value, respectively, of the compression ratio and at a variable angle before top dead centre the effective compression ratio will lie between these values.

Two methods may be readily envisaged for achieving control of the compression ratio in a practical engine. In the first method, the auxiliary valve is opened for a predetermined period during each cycle and the phase of opening is adjusted to alter the compression ratio. In such an embodiment, the auxiliary valve could be a rotary valve or a poppet valve actuated by a separate camshaft and driven by a suitable phase change device such as an epicyclic drive or a helical coupling.

In the second method, the valve opening time is fixed but the valve remains open for a variable period to achieve variable valve closing. This may be achieved by using two valves in series, the preferred embodiment employing a poppet valve in series with a rotary valve. The first valve, namely the poppet valve, has a fixed period and timing and is operated by a third cam on the main camshaft of the engine. The rotary valve also has a fixed period but is separately driven by a phase change device in order to provided variable cut-off. In such a case, the auxiliary volume is only connected to the main cyclinder when both the valves are opened simultaneously.

This arrangement introduces a small additional volume, namely that between the first and second auxiliary valves, and the variable compression ratio may be considered to operate in three stages.

Ic has been found advantageous to direct the outflow from the auxiliary volume at the spark plug in order to improve combustion stability and lean burn capability. The outflow from the auxiliary vo ume may also be directed tangentially in order to promote swirl in the combustion volume.

The auxiliary valve opening is preferably set to occur after the closing of the intake valve in order to ensure full intake charge.

In order to extend the knock limit, the auxiliary volume may be cooled during the shut-off period to lower indirectly the end of compression gas temperature. Such cooling may be effected by means of a heat exchanger but preferably metered quantities of water are introducrd into the auxiliary chamber, the latter method offering the advantage of better control.

Another advantage associated with the provision of an auxiliary volume to vary the compression ratio is that if the auxiliary valve is opened before the intake valve is closed, the reduction of compression ratio by delaying the auxiliary valve closing is always accompanied by a reduction in the percentage of air usage. This results from the fact that a proportion of the cylinder mass is transferred to the auxiliary volume which is then cut-off from combustion. This feature can be applied as a means of power modulation for operating the engine at part loads with the throttle fully open and would reduce the pumping loss normally associated with throttled operation in petrol engines.

There are two modes of implementation of the variable compression ratio operation which invoke different physical principles. In the first mode, the variable compression ratio is achieved by partial admission. The auxiliary valve is opened during the cylinder intake period before the intake valve is closed. In this mode, pressure in the auxiliary volume equalises initially with the prevailing cylinder induction pressure. As the cylinder mass is subsequently trapped at the closing of the intake valve and compressed, a proportion of it is transferred to the auxiliary volume which is then shut off from combustion. Consequently, there is a progressive reduction in the effective air usage and a reduction in the power output with decreasing compression ratio. This mode is an analogous of the situation of partial admission by late intake valve closing where a portion of the cylinder mass is taken out and put back into the intake system unused.

In the second mode, variable compression ratio is achieved by heat transfer and the auxiliary valve opens at the beginning of the compression period after the intake valve has closed. The inducted cylinder mass in this mode is trapped upon closing of the intake valve before the auxiliary valve opens. The temperature and pressure of the combined masses equalise to a new mean level as the auxiliary volume expands out into the cyclinder volume. Subsequent compression would therefore proceed with this new pressure and temperature as the initial condition. By introducting deliberate cooling into the auxiliary volume during the shut-off period to lower its temperature, the initial compression condition can be lowered which in turn lowers the end of compression gas temperature.

It is possible to achieve a range of end of compression temperatures equivalent to those of a range of compression ratios by this means. As engine. knock is primarily related to the end of compression temperature, such a variable compression ratio system will be effective in suppressing engine knock.

Such a system is analogous to a high compression, high turbulence engine where there is rapid cooling during compression. The auxiliary volume serves as as buffer where a portion of the cylinder mass is transferred and where heat can be removed efficiently through increased area and increased time and the cooled mass is then put back into the cylinder for compression from a lower datum. By the time the auxiliary valve closes, some of the cylinder mass is recompressed back into the auxiliary volume but when the steady condition is reached after a number of engine cycles there will be no nett mass transfer into the auxiliary volume and the whole of the inducted mass is available for combustion. Consequently, the system operating in this mode is capable of full power output.

Variable compression ratio and power modulation by "partial admission" can also be achieved by the auxiliary valve timings described with reference to the second mode of operation by introducing the return bleed from the auxiliary volume to the intake port, as shown in Figure 2, with the return flow controlled by a throttle valve. When this throttle is completely shut, the engine will have 100 per cent air utilisation and maximum compression ratio. When the throttle is partly open, some of the auxiliary volume is bled back into the intake system so that the percentage air utilisation in the cylinder is reduced and at the same time the effective compression ratio is decreased.

In such a case the engine could run into knock at high loads and high compression ratio. By cooling the auxiliary volume as described previously it is possible to lower the end of compression gas temperature and thereby suppress knock. Consequently, a combined return bleed and heat transfer from the auxiliary volume would enable advantage to be taken of the improved cycle efficiency using a high expansion ratio but still operate clear of the knock limits at high loads. This means of power modulation also has the advantage that during part load operation, part of the cylinder charge is re-cycled via the auxiliary volume where complete fuel vapourisation can take place. This would ensure a homogeneous mixture and equal mixture distribution between cylinders. Furthermore, the unthrottled condition ensures maximum intake air velocity and high levels of in-cylinder swirl and turbulence regardless of engine load.

Such a system would operate satisfactorily even without variable auxiliary valve closing, that is to say with omission of the rotary valve and phase change mechanism. In such a system, the entire operating range would be controlled by the return bleed throttle alone.

## CLAIMS

1.    An internal combustion engine having a combustion chamber, an auxiliary chamber communicating with the combustion chamber and valve means connecting the auxiliary chamber to the combustion chamber, characterised in that the valve means (20) are operative to isolate the auxiliary chamber (22) from the combustion chamber (12) during the compression period to remove a variable fraction of the charge from the combustion process in such a manner as to vary the effective compression ratio of the engine and or the effective air usage.

2.    An internal combustion engine as claimed in claim 1, wherein the valve means (20) for isolating the auxiliary chamber from the combustion chamber comprises a valve driven by way of a phase change mechanism from the camshaft so as to open at a variable phase angle during each induction period and close at a variable phase angle during each compression period.

3.    An internal combustion engine as claimed in claim 1, wherein the valve means (20) for isolating the auxiliary chamber (22) from the combustion chamber (12) comprises a first valve in series with a second valve, communication being established between the chambers only when both valves are open, the first valve being opened at a constant phase angle during the induction period  and the second valve being closed at a variable phase angle during each compression period.

4.    An internal combustion engine as claimed in any preceding claim, wherein the flow of gas from the auxiliary chamber into the combustion chamber is directed tangentially.

5. An internal combustion engine as claimed in any preceding claim, wherein the flow of gas from the auxiliary chamber into the combustion chamber is directed towards the sparking plug.

6. An internal combustion engine as claimed in any preceding claim, wherein a return passage is provided to enable gas from the auxiliary chamber to be returned to the air intake passage.

7. An internal combustion engine as claimed in claim 6, wherein a variable throttle device is provided within the return passage.

8. An internal combustion engine as claimed in claim 7, wherein the auxiliary valve timing is fixed and the air usage is varied by regulating the said variable throttle device.

9. An internal combustion engine as claimed in any preceding claim, wherein cooling means are provided within the auxiliary chamber (22).

10. An internal combustion engine as claimed in claim 9, wherein said cooling means include means for spraying a controlled quantity of water into the auxiliary chamber.

1-1

FIG. I.

FIG. 2.